# FASCICULE DE BREVET EUROPEEN

(11) **EP 1 275 980 B1**
(45) Date de publication et mention de la délivrance du brevet: **26.11.2008**
(21) Numéro de dépôt: 02291697.7
(22) Date de dépôt: 05.07.2002
(51) Int. Cl.: G01S 13/78

(54) **Procédé et dispositif de prévention des disparités ou messages d'erreur et des fausses réponses dans des systèmes de type IFF**
Verfahren und Vorrichtung zur Vermeidung der Disparitäten oder Fehlmeldungen und fehlerhaften Antworten in FFI-Systemen
Method and system for preventing disparities or error messages and erroneous responses in FFI type systems

(30) Priorité: 10.07.2001 FR 0109162
(43) Date de publication de la demande: 15.01.2003
(73) Titulaire: THALES, 92200 Neuilly sur Seine (FR)
(72) Inventeur: Martin, Jean-Claude, c/o Thales Intellect Property, 94117 Arcueil, Cedex (FR)
(74) Mandataire: Dudouit, Isabelle

(56) Documents cités:
- FR-A- 2 632 421

## Description

La présente invention concerne un procédé et un dispositif de prévention des disparités ou messages d'erreur dans des systèmes de type IFF (Identification Friend or Foe) et des fausses réponses.

L'invention s'applique notamment dans les systèmes d'identification IFF utilisés dans le domaine de l'aviation militaire fonctionnant par exemple avec le Mode 4 qui est un mode d'interrogation / réponse crypté dont la forme d'onde est décrite dans l'accord de normalisation de l'OTAN, le STANAG 4193.

Dans la suite de la description, on désigne sous l'expression « Mode National », un mode d'interrogation/réponse crypté utilisé dans des systèmes d'identification IFF par question-réponse, nationaux. La forme d'onde du Mode National a une structure identique à celle du Mode 4, mais utilise pour le cryptage des algorithmes de chiffrement différents.

Pour rappel, dans les systèmes IFF, si l'on interroge en Mode National, seuls les répondeurs capables de comprendre le Mode National répondront. De même, si on interroge en Mode 4, seuls les répondeurs capables de comprendre le Mode 4 répondront.

Un interrogateur choisit d'interroger en Mode 4 ou en Mode National. Un répondeur ne sait pas dans quel mode il sera interrogé. Divers cas peuvent alors se présenter :
- si le répondeur n'est équipé que pour le Mode 4, il ne pourra répondre qu'aux interrogations en Mode 4, en supposant qu'il possède les bonnes clés pour le décryptage,
- lorsque le répondeur n'est équipé que pour le Mode National, ce dernier ne peut répondre qu'aux interrogations dans le Mode National, toujours s'il possède les bonnes clés.

Les configurations des systèmes actuels peuvent engendrer des problèmes de reconnaissance des messages et de fausses alertes dans le fonctionnement. Par exemple, lorsqu'un aéronef équipé d'un répondeur Mode 4 est interrogé par un interrogateur utilisant un mode dit « National », il arrive fréquemment qu'une alarme sonore soit déclenchée pour prévenir le pilote d'une « disparité ». Cette disparité signifie que l'interrogation reçue a le bon format mais qu'elle ne peut être décodée par l'algorithme du Mode 4. Le déclenchement des alarmes sonores est par exemple décrit dans le STANAG 4193.

Dans certains cas, une « fausse » réponse est émise car l'interrogation est décryptée par l'algorithme Mode 4, mais son contenu est différent de celui crypté en Mode National.

Le brevet FR-A-2 632 421 concerne des systèmes d'identification du type IFF mode 4 dans lequel le préambule du message d'identification IFF mode 4 est modifié en effectuant une modulation par inversion de phase de certaines des impulsions du préambule de ce message.

L'objet de l'invention repose sur une nouvelle approche qui permet notamment d'obtenir le résultat suivant : un répondeur Mode National (mode MN) ne répond pas aux interrogations du Mode 4 (mode M4) et n'est pas perturbé par une alarme sonore. De même, un répondeur Mode 4 ne répond pas aux interrogations Mode National et n'est pas perturbé par une alarme sonore lorsqu'il est interrogé en Mode National.

Cette approche peut être appliquée dans tout système d'interrogation-réponse comportant deux modes présentant une même structure de messages mais des clés de cryptage différentes.

En fait, les deux modes mis en oeuvre dans le système interrogateur-répondeur s'ignorent et ne se perturbent pas, évitant de fait les alarmes sonores éventuelles et des fausses réponses.

Le procédé et le système objets de la présente invention ont notamment pour fonction de modifier la structure du message d'interrogation, notamment l'intervalle temporel séparant le préambule du bloc contenant les informations, afin qu'il soit ignoré par le répondeur non concerné.

L'invention concerne un procédé pour éviter de créer des disparités dans un système d'interrogation-réponse programmé dans un premier mode et interrogé par un second mode, le premier mode et le second mode ayant une même structure de message avec une une clé de chiffrement différente, le format du message étant constitué d'un préambule suivi d'un bloc d'informations séparé par un intervalle de temps T **caractérisé en ce qu**'il comporte au moins les étapes suivantes :
- interfacer un interrogateur et un répondeur à un dispositif de chiffrement pour transmettre un message, et
- modifier ainsi l'intervalle de temps T entre la fin du préambule et le début du bloc d'informations du message en un intervalle de temps Ti différent de T.

L'intervalle de temps initial T est par exemple augmenté, Ti étant supérieur à T ou bien selon une autre variante il est diminué, Ti étant inférieur à T.

Le procédé comporte par exemple une étape de gestion dynamique des valeurs de Ti afin de pouvoir programmer plusieurs modes MN.
- L'invention concerne aussi un dispositif permettant d'éviter de générer des disparités dans un système de type IFF comportant au moins un interrogateur et au moins un répondeur, les deux étant pourvus d'un calculateur de crypto programmé dans un premier mode, Mode National, les messages échangés entre un interrogateur et un répondeur ayant une structure composée d'un préambule et d'un bloc contenant les informations, séparés par un intervalle de temps T
**caractérisé en ce qu**'il comporte :
- un interrogateur en Mode National (MN), ledit interrogateur comportant au moins une première interface disposée entre l'interrogateur et un premier calculateur crypto, la première interface étant adaptée à modifier l'intervalle de temps initial T en un intervalle Ti,
- un répondeur en Mode National (MN), ledit répondeur comportant au moins une seconde interface disposée entre le répondeur et un second calculateur crypto, ladite seconde interface étant adaptée à modifier l'intervalle de temps Ti du message reçu en un intervalle de temps T correspondant à l'intervalle introduit au niveau de l'interrogateur.

L'interface peut être une fonction logicielle intégrée dans un processeur ou encore réalisée sous la forme d'une ligne de retard disposée entre le répondeur ou l'interrogateur et le calculateur crypto.

Une interface peut être adaptée pour gérer et générer plusieurs valeurs d'intervalles Ti, les valeurs étant choisies en fonction du mode MN souhaité.

Les différentes valeurs d'intervalles Ti sont générées simultanément et les répondeurs équipés des interfaces spécifiques répondent uniquement dans un mode d'interrogation donné.

La présente application présente notamment les avantages suivants :
- Elle évite de créer des « disparités » ou messages d'erreur et/ou des réponses erronées lorsqu'un répondeur est interrogé dans un mode différent de celui pour lequel il est programmé.
- La valeur fixée du délai T (retard ou avance), ou intervalle de temps précité, permet de créer des canaux différents pour différents systèmes ou modes nationaux. Plusieurs systèmes peuvent ainsi fonctionner simultanément, selon des modes différents sans générer de disparités avec alarmes sonores ou de fausses réponses avec les systèmes présents dans le voisinage.
- A l'aide d'une gestion dynamique des délais T, les possibilités de codage sont augmentées. A chaque délai, il est possible d'associer un type d'interrogation. Pour un même système on peut utiliser simultanément plusieurs retards T et accroître les possibilités de chiffrement.
- Un interrogateur peut interroger des répondeurs de différents systèmes en modifiant la valeur du délai T.
- Les calculateurs cryptographiques existants peuvent être conservés, seules les interfaces entre le calculateur cryptographie et les interrogateurs/répondeurs nationaux sont modifiées.
- Un répondeur peut être équipé du plusieurs calculateurs cryptographiques avec des modes de cryptage différents sans perturbation entre calculateurs.
- Aucune disparité et fausse réponse n'est émise par les calculateurs n'étant pas dans le mode d'interrogation.

D'autres caractéristiques et avantages de la méthode et du dispositif selon l'invention apparaîtront à la lecture de la description donnée à titre illustratif et nullement limitatif annexée des figures qui représentent :
- La figure 1 une structure d'un échange des messages dans un système IFF selon l'art antérieur,
- La figure 2 la structure d'un message d'interrogation du Mode 4 et du Mode National sans modification selon l'invention,
- Les figures 3A et 3B un premier exemple d'interrogateur et de répondeur programmés pour un Mode National selon l'invention,
- Les figures 4A et 4B une deuxième variante de réalisation d'un système comprenant un interrogateur et un répondeur programmés en Mode National.
- Les figures 5A et 5B un exemple de répondeur avec plusieurs calculateurs programmés avec des modes différents.

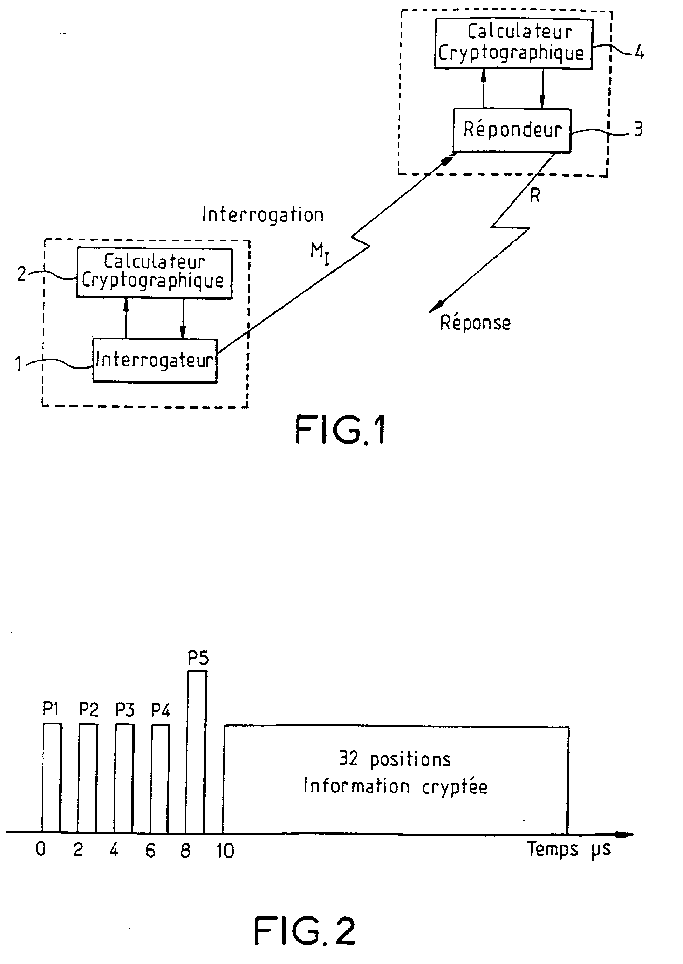

La figure 1 rappelle le principe d'interrogation-réponse en mode Mode 4 donné pour un répondeur équipé du Mode 4. Un système IFF comportant un interrogateur 1 associé à un calculateur 2 de cryptographie, interroge un répondeur 3 en émettant un message M_{I} dont le format ou structure est rappelé à la figure 2. Le répondeur 3 transmet le message d'interrogation M_{I} au calculateur 4 de cryptographie auquel il est relié. Le calculateur 4 de cryptographie détermine s'il est interrogé en Mode 4 avec les bonnes clés ou non. Dans le cas d'une interrogation valide, il transmet au bout d'un délai donné un message de réponse R à l'interrogateur. Dans les autres cas, c'est à dire s'il est interrogé en Mode 4 avec de mauvaises clés ou interrogé dans un Mode National, il y a détection d'une disparité et création d'une alarme. Le message de réponse se présente sous la forme de trois impulsions espacées de 1.75 µs émises avec un délai choisi parmi 16 possibilités.

Des exemples d'architecture des systèmes IFF peuvent être trouvés dans le document : "Secondary Surveillance Radar" de Michael C. Stevens, Editions Artech House, Boston, 1988.

La figure 2 schématise le format ou structure du message d'interrogation M_{I} du Mode 4. Ce message est composé d'un groupe de quatre impulsions P₁, P₂, P₃ et P₄, suivies d'une impulsion P₅ de commande de suppression des interrogations dans les lobes secondaires (ISLS) et d'un groupe d'impulsions d'information composé de 32 positions pouvant être ou non occupées par une impulsion. Toutes les impulsions et positions sont espacées de 2 µs et chaque impulsion dure 0.5 µs.

Le groupe d'information commence 10 µs après la première impulsion P₁. Dans ce groupe de 32 impulsions possibles, quand des positions d'impulsions contiguës sont libres on introduit à des positions correspondant à des multiples impairs de microseconde des impulsions anti interférence (All). La première de ces impulsions peut être située à 9 µs de P₁.

Du fait de la structure des informations contenues dans le groupe d'informations, lorsqu'un répondeur en Mode National est interrogé en Mode 4 et, vice versa, lorsqu'un répondeur en Mode 4 est interrogé en Mode National, il y a probabilité p définie d'avoir une disparité déclenchant un signal sonore et une probabilité q de répondre avec une fausse réponse.

L'idée de l'invention consiste à modifier la structure du message d'interrogation tout en conservant les deux caractéristiques principales qui sont le préambule suivi de l'impulsion de commande de suppression des lobes secondaires et du bloc d'information pouvant contenir jusqu'à 32 impulsions. Pour cela, le procédé modifie l'intervalle de temps T séparant la dernière impulsion de synchronisation P₄ de la première impulsion du groupe ou bloc d'informations afin de générer une structure de message différente pour une interrogation en Mode National. Si T désigne le délai pour le Mode 4, l'idée est de définir un délai Ti différent de T valant 4 ± 0,1 µs. Les valeurs de T sont par exemple quantifiées pour permettre une tolérance de l'ordre de 0,1 µs.

Dans les systèmes concernés par l'invention, un interrogateur choisit d'interroger en Mode 4 ou en Mode National. Il en est de même pour un répondeur qui est adapté à fonctionner en Mode 4 ou avec un Mode National uniquement ou bien avec plusieurs modes simultanément.

Le système IFF selon l'invention consiste par exemple à modifier les interfaces entre interrogateurs/répondeurs et le calculateur cryptographique pour le Mode National. Ainsi, le système comporte par exemple les éléments suivants :

### Du côté interrogateur.

### Interrogation en Mode 4

II n'y a aucune modification de structure par rapport aux dispositifs existants.

### Interrogation en Mode National

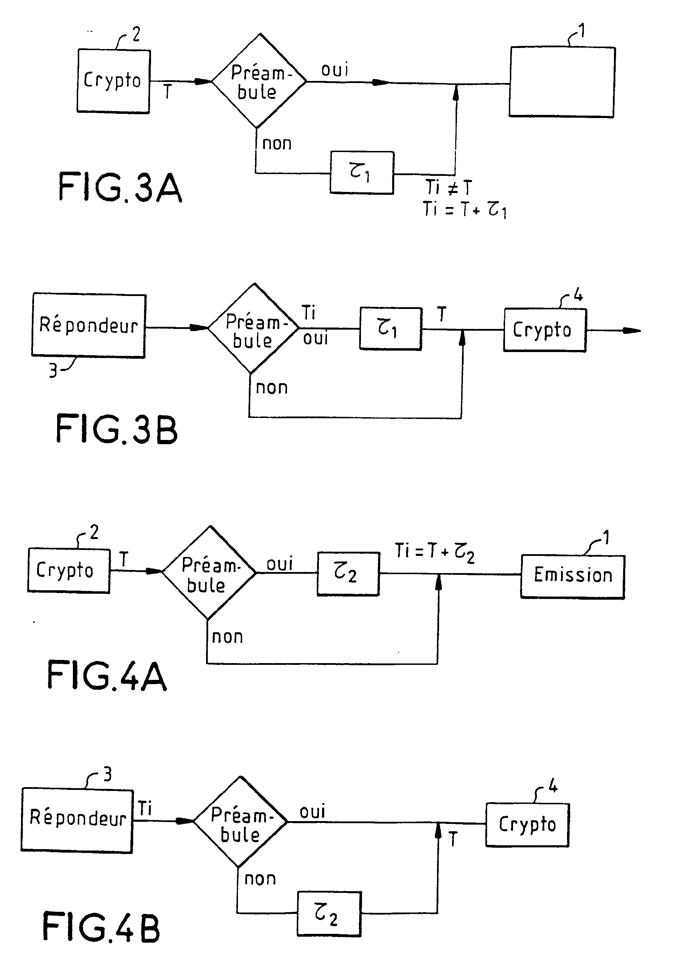

L'interrogateur comporte une interface dont deux exemples sont donnés aux figures 3A et 4A, permettant de définir un intervalle de temps Ti entre la dernière impulsion de synchro P₄ et le début du bloc de message différent de l'intervalle T du Mode 4.

### Du côté du répondeur

### Répondeur équipé Mode 4

Il n'y a pas de modification de structure
Dans le cas d'un répondeur équipé Mode 4, le message est envoyé au calculateur de cryptographie sans modification. Si c'est un message Mode 4 il est déchiffré par le calculateur crypto. Si c'est un message Mode National, ce dernier est rejeté du fait de la différence de structure, différence d'intervalle de temps Ti introduite au niveau de l'émetteur.

### Répondeur équipé pour un Mode National

Le répondeur équipé pour un Mode National comporte une interface ayant notamment pour fonction de modifier l'intervalle de temps initial Ti du Mode National en un intervalle de temps T qui est celui du Mode 4, ceci avant de transmettre le message d'interrogation reçu vers le calculateur crypto.

Les figures 3A et 3B schématisent un premier exemple de structure d'un interrogateur émettant en Mode National et d'un répondeur Mode National équipés d'une interface selon l'invention, permettant d'accroître le délai Ti.

L'interrogateur schématisé à la figure 3A comporte un calculateur de cryptographie relié à un dispositif d'émission d'un message au moyen d'une interface ayant pour fonction d'accroître la valeur de l'intervalle de temps initial T en une valeur Ti définie selon le Mode National souhaité.

L'interface peut être réalisée en logiciel ou encore en Hardware.

L'interrogateur émet vers le calculateur cryptographique une demande d'interrogation M₁ et reçoit du calculateur les 4 impulsions de synchronisation suivies par le bloc de 32 impulsions d'information.

Entre la réception des impulsions du calculateur et l'émission, le procédé selon l'invention introduit un retard τ1 tel que Ti = T+ τ1> T de la manière suivante :
- Si les impulsions appartiennent au préambule du message, elles sont transmises directement vers la partie émission,
- Si les impulsions appartiennent au bloc d'informations, le procédé introduit le retard τ1.
La structure du message M₁ diffère de celle de la figure 2 par l'intervalle de temps T₁>T. Dans le cas du Mode 4, la valeur de Tᵢ est choisie supérieure à 4 µs.

Le retard τ1 est produit soit par une fonction logicielle intégrée dans un processeur existant soit au moyen d'une ligne de retard ou de registres à décalages selon un schéma connu de l'Homme du métier.

Le répondeur de la figure 3B comporte une interface disposée entre le répondeur et le calculateur crypto. Le message d'interrogation reçu par le répondeur passe dans la partie récepteur du répondeur, puis dans l'interface qui modifie sa structure de la manière suivante :
- Les impulsions faisant partie du préambule du message sont retardées de τ1 égal au retard introduit au niveau de l'interrogateur pour le bloc d'information,
- Les impulsions représentatives des informations sont transmises directement au calculateur crypto.

Ces opérations sont effectuées soit au moyen d'un processeur, soit en utilisant une ligne de retard Hardware disposée entre la partie répondeur et le calculateur crypto, cette ligne voyant passer les informations utiles.

Selon un autre mode de mise en oeuvre de l'invention, le procédé consiste à diminuer la valeur de l'intervalle temporel initial du message pour obtenir une valeur de Ti différente de celle du Mode 4.

Les figures 4A et 4B schématisent respectivement un interrogateur et un répondeur équipés chacun d'une interface permettant d'obtenir un tel résultat.

Au niveau de l'interrogateur, figure 4B, le message d'interrogation en Mode National issu du calculateur de cryptographie est transformé de la façon suivante :
- Le train des 4 impulsions de synchronisation est retardé de τ2 afin d'obtenir un intervalle de temps T₂=T-τ2< T avant de les transmettre à la partie émission, alors que
- les impulsions représentatives des informations sont transmises à la partie émission sans retard.
Le message d'interrogation envoyé vers le répondeur possède une structure M₂ différente de M par l'intervalle de temps T₂ inférieur à T. Dans le cas du Mode 4, par exemple, T₂ est inférieur à 4 µs.

L'interface peut être réalisée au moyen d'un logiciel adapté ou en Hardware en utilisant une ligne de retard connue de l'Homme du métier par laquelle transitent les impulsions qui doivent être retardées.

Au niveau du répondeur, figure 4B, le message d'interrogation de structure M₂ est reçu par le répondeur. Il est ensuite transformé par l'interface avant d'être transmis au calculateur crypto.

La transformation est effectuée de la manière suivante :
- les impulsions représentatives du préambule sont transmises directement, alors que,
- les impulsions associées aux informations sont retardées de τ2 avant transmission vers le calculateur cryptographique.
On retrouve ainsi la structure du message M.

L'interface est réalisée sous la forme d'un logiciel intégré dans un processeur ou d'une ligne de retard matériel selon des techniques connues de l'Homme du métier.

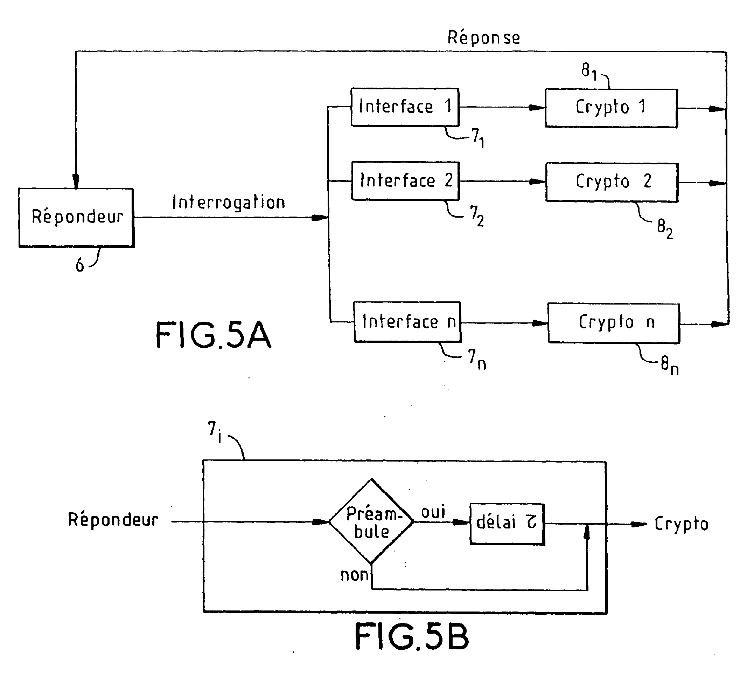

Les figures 5A et 5B représentent un exemple de répondeur comportant plusieurs calculateurs programmés avec des modes différents.

Le répondeur 6 est relié aux différents calculateurs crypto 8₁, 8₂, ..., 8ₙ en parallèle au moyen d'interfaces 7₁, 7₂, .....7ₙ.

Une interface 7ᵢ est détaillée à la figure 5B. Elle comporte des éléments identiques à ceux de la figure 3B par exemple.

Selon une variante de réalisation, le procédé génère plusieurs valeurs d'intervalles Ti différentes pour un même système, suivant les missions ou la programmation données.

Plusieurs valeurs de Ti peuvent être utilisées simultanément. Pour cela, au niveau des interrogateurs, le processeur programmé pour mettre en oeuvre les étapes précitées ou la partie matérielle adaptée pour les réaliser permettent une gestion dynamique de ces valeurs d'intervalle de temps. Par cette méthode on peut tout en gardant les mêmes algorithmes cryptographiques et les mêmes clés avoir des canaux différents disjoints. On peut aussi pour chaque délai avoir une crypto différente.

Par exemple, à chaque retard correspond un type d'interrogation. Pour un même système il est alors possible d'utiliser simultanément plusieurs retards et d'accroître ainsi les possibilités de chiffrement. Les interrogateurs sont pourvus de moyens permettant de réaliser cette gestion dynamique des retards. Les répondeurs sont soit équipés pour ne recevoir qu'un seul mode d'interrogation et sont munis de l'interface correspondante soit équipés pour recevoir plusieurs modes. Seul le calculateur crypto correspondant au mode de l'interrogation fournissant une réponse.

## Revendications

1. Procédé pour éviter de créer des disparités dans un système d'interrogation-réponse programmé dans un premier mode et interrogé par un second mode, le premier mode et le second mode ayant une même structure de message avec une clé de chiffrement différente, le format du message étant constitué d'un préambule suivi d'un bloc d'informations séparé par un intervalle de temps T **caractérisé en ce qu'**il comporte au moins les étapes suivantes :
• interfacer un interrogateur et un répondeur à un dispositif de chiffrement (2, 4) pour transmettre un message, et
• modifier ainsi l'intervalle de temps T entre la fin du préambule et le début du bloc d'informations du message en un intervalle de temps Ti différent de T.

2. Procédé selon la revendication 1 **caractérisé en ce que** l'intervalle de temps initial T est augmenté, Ti étant supérieur à T.

3. Procédé selon la revendication 1 **caractérisé en ce que** l'intervalle de temps initial T est diminué, Ti étant inférieur à T.

4. Procédé selon l'une des revendications 1 à 3 **caractérisé en ce que** qu'elle comporte une étape de gestion dynamique des valeurs de Ti afin de pouvoir programmer plusieurs modes MN.

5. Application de la méthode selon l'une des revendications 1 à 4 à un système d'identification utilisant le Mode 4 ,M4 et un Mode National ,MN.

6. Dispositif permettant d'éviter de générer des disparités dans un système de type IFF comportant au moins un interrogateur et au moins un répondeur, les deux étant pourvus d'un calculateur de crypto programmé dans un premier mode, mode national, les messages échangés entre un interrogateur et un répondeur ayant une structure composée d'un préambule et d'un bloc contenant les informations, séparés par un intervalle de temps T **caractérisé en ce qu'**il comporte :
• un interrogateur en Mode National MN, ledit interrogateur comportant au moins une première interface disposée entre l'interrogateur et un premier calculateur crypto (2), la première interface étant adaptée à modifier l'intervalle de temps initial T en un intervalle Ti,
• un répondeur en Mode National MN, ledit répondeur comportant au moins une seconde interface disposée entre le répondeur et un second calculateur crypto (4), ladite seconde interface étant adaptée à modifier l'intervalle de temps Ti du message reçu en un intervalle de temps T correspondant à l'intervalle introduit au niveau de l'interrogateur.

7. Dispositif selon la revendication 6 **caractérisé en ce que** l'interface est une fonction logicielle intégrée dans un processeur.

8. Dispositif selon la revendication 6 **caractérisé en ce que** l'interface est une ligne de retard disposée entre le répondeur ou l'interrogateur et le calculateur crypto.

9. Dispositif selon l'une des revendications 6 à 8 **caractérisé en ce qu'**une interface est adaptée pour gérer et générer plusieurs valeurs d'intervalles Ti, les valeurs étant choisies en fonction du mode MN souhaité.

10. Dispositif selon la revendication 8 **caractérisé en ce que** l'interface est adapté pour utiliser simultanément plusieurs modes d'interrogation et **en ce que** les répondeurs équipés des interfaces spécifiques répondent dans le mode d'interrogation uniquement.

11. Dispositif selon l'une des revendications 6 à 10 **caractérisé en ce que** le calculateur de crypto est programmé en Mode 4.

## Claims

1. Method for avoiding creating disparities in an interrogation-response system programmed in a first mode and interrogated by a second mode, the first mode and the second mode having one and a same message structure with a different enciphering key, the format of the message consisting of a preamble followed by an information block separated by a time interval T **characterized in that** it comprises at least the following steps:
• interfacing an interrogator and a responder to an enciphering device (2,4) to transmit a message, and
• thus modifying the time interval T between the end of the preamble and the start of the information block of the message into a time interval Ti different from T.

2. Method according to Claim 1 **characterized in that** the initial time interval T is increased, Ti being greater than T.

3. Method according to Claim 1 **characterized in that** the initial time interval T is decreased, Ti being less than T.

4. Method according to one of Claims 1 to 3 **characterized in that** it comprises a step of dynamically managing the values of Ti so as to be able to programme several modes NM.

5. Application of the method according to one of Claims 1 to 4 to an identification system using Mode 4 (M4) and a National Mode (NM).

6. Device making it possible to avoid generating disparities in a system of IFF type comprising at least one interrogator and at least one responder, both being provided with a crypto computer programmed in a first mode, national mode, the messages exchanged between an interrogator and a responder having a structure composed of a preamble and of a block containing the information, separated by a time interval T **characterized in that** it comprises:
• an interrogator in National Mode NM, said interrogator comprising at least one first interface disposed between the interrogator and a first crypto computer (2), the first interface being adapted for modifying the initial time interval T into an interval Ti,
• a responder in National Mode NM, said responder comprising at least one second interface disposed between the responder and a second crypto computer (4), said second interface being adapted for modifying the time interval Ti of the message received into a time interval T corresponding to the interval introduced at the interrogator level.

7. Device according to Claim 6 **characterized in that** the interface is a software function integrated into a processor.

8. Device according to Claim 6 **characterized in that** the interface is a delay line disposed between the responder or the interrogator and the crypto computer.

9. Device according to one of Claims 6 to 8 **characterized in that** an interface is adapted for managing and generating several interval values Ti, the values being chosen as a function of the mode NM desired.

10. Device according to Claim 8 **characterized in that** the interface is adapted for simultaneously using several interrogation modes and **in that** the responders equipped with the specific interfaces respond in the interrogation mode only.

11. Device according to one of Claims 6 to 10 **characterized in that** the crypto computer is programmed in Mode 4.

## Patentansprüche

1. Verfahren, um die Erzeugung von Disparitäten in einem in einem ersten Modus programmierten und von einem zweiten Modus abgefragten Abfrage-Antwort-System zu vermeiden, wobei der erste Modus und der zweite Modus die gleiche Mitteilungsstruktur mit einem unterschiedlichen Verschlüsselungsschlüssel haben, wobei das Format der Mitteilung aus einer Präambel gefolgt von einem Informationsblock besteht, der durch ein Zeitintervall T getrennt ist, **dadurch gekennzeichnet, dass** es mindestens die folgenden Schritte aufweist:
• Verbinden eines Abfrageeinrichtung und einer Antworteinrichtung mit einer Verschlüsselungsvorrichtung (2, 4), um eine Mitteilung zu übertragen, und
• **dadurch** das Zeitintervall T zwischen dem Ende der Präambel und dem Beginn des Informationsblocks der Mitteilung in ein Zeitintervall Ti zu verändern, das sich von T unterscheidet.

2. Verfahren nach Anspruch 1, **dadurch gekennzeichnet, dass** das ursprüngliche Zeitintervall T vergrößert wird, wobei Ti größer als T ist.

3. Verfahren nach Anspruch 1, **dadurch gekennzeichnet, dass** das ursprüngliche Zeitintervall T verkleinert wird, wobei Ti kleiner als T ist.

4. Verfahren nach einem der Ansprüche 1 bis 3, **dadurch gekennzeichnet, dass** es einen Schritt der dynamischen Verwaltung der Werte von Ti aufweist, um mehrere Modi MN programmieren zu können.

5. Anwendung des Verfahrens nach einem der Ansprüche 1 bis 4 auf ein Identifikationssystem, das den Modus 4 ,M4 und einen Nationalen Modus ,MN verwendet.

6. Vorrichtung, die es ermöglicht, die Erzeugung von Disparitäten in einem System vom Typ IFF zu vermeiden, die mindestens eine Abfrageeinrichtung und mindestens eine Antworteinrichtung aufweist, die beide mit einem Cryptorechner versehen sind, der in einem ersten Modus, nationaler Modus, programmiert ist, wobei die zwischen einer Abfrageeinrichtung und einer Antworteinrichtung ausgetauschten Mitteilungen eine Struktur haben, die aus einer Präambel und einem die Informationen enthaltenden Block besteht, die durch ein Zeitintervall T getrennt sind, **dadurch gekennzeichnet, dass** sie aufweist:
• eine Abfrageeinrichtung im Nationalen Modus MN, wobei die Abfrageeinrichtung mindestens eine erste Schnittstelle aufweist, die zwischen der Abfrageeinrichtung und einem ersten Cryptorechner (2) angeordnet ist, wobei die erste Schnittstelle geeignet ist, um das ursprüngliche Zeitintervall T in ein Intervall Ti umzuändern,
• eine Antworteinrichtung im Nationalen Modus MN, wobei die Antworteinrichtung mindestens eine zweite Schnittstelle aufweist, die zwischen der Antworteinrichtung und einem zweiten Cryptorechner (4) angeordnet ist, wobei die zweite Schnittstelle geeignet ist, um das Zeitintervall Ti der empfangenen Mitteilung in ein Zeitintervall T umzuändern, das dem Intervall entspricht, das auf der Ebene der Abfrageeinrichtung eingeführt wird.

7. Vorrichtung nach Anspruch 6, **dadurch gekennzeichnet, dass** die Schnittstelle eine in einen Prozessor integrierte Software-Funktion ist.

8. Vorrichtung nach Anspruch 6, **dadurch gekennzeichnet, dass** die Schnittstelle eine Verzögerungsleitung ist, die zwischen der Antworteinrichtung oder der Abfrageeinrichtung und dem Cryptorechner angeordnet ist.

9. Vorrichtung nach einem der Ansprüche 6 bis 8, **dadurch gekennzeichnet, dass** eine Schnittstelle geeignet ist, um mehrere Intervallwerte Ti zu verwalten und zu erzeugen, wobei die Werte in Abhängigkeit vom gewünschten Modus MN gewählt werden.

10. Vorrichtung nach Anspruch 8, **dadurch gekennzeichnet, dass** die Schnittstelle geeignet ist, um gleichzeitig mehrere Abfragemodi zu verwenden, und dass die mit den spezifischen Schnittstellen ausgestatteten Antworteinrichtungen nur im Abfragemodus antworten.

11. Vorrichtung nach einem der Ansprüche 6 bis 10, **dadurch gekennzeichnet, dass** der Cryptorechner im Modus 4 programmiert ist.
